# EUROPEAN PATENT APPLICATION

(11) **EP 2 053 578 A1**
(43) Date of publication of application: **29.04.2009**
(21) Application number: 08166124.1
(22) Date of filing: 08.10.2008
(51) Int. Cl.: G09B 7/00

(54) **Sensing type learning card and learning system thereof**

(30) Priority: 08.10.2007 US 978195 P
(71) Applicant: G-Time Electronic Co., Ltd., Siangshan District Hsinchu City 300 (TW)
(72) Inventor: HOU, Tien-Fa, Hsinchu City 300 (TW); WU, Che-Ming, Taichung County 423 (TW)
(74) Representative: Rühland, Hans Constantin

(57) **Abstract**

The invention discloses a sensing type learning card and a learning system including the card and a card reader. The sensing type learning card includes at least one card body and at least one identification label. The card reader includes a platform with a defined card disposing area, at least one sensing unit installed at the platform, at least one display unit installed on the card disposing area, a storage unit for storing at least one learning data, and a processing unit. The card body includes a transparent area. The identification label stores an identification data. If the sensing type learning card is disposed on the card disposing area, the sensing unit senses the identification label to read the identification data, and the processing unit inquires a learning data corresponding to the identification data from the storage unit, and drives the display unit to display the inquired learning data.

## Description

### BACKGROUND OF THE INVENTION

### Field of the Invention

The present invention relates to a sensing type learning card and its learning system, and more particularly to a sensing type learning card and its learning system having a sensing unit to read an identification data and a display unit for displaying a corresponding learning data.

### Description of the Related Art

Learning cards are applicable for children to learn new words, and each learning card records a word corresponding to a picture. If a child uses the learning cards for learning, an instructor (such as a teacher, or the child's father or mother) recites a word on the learning card, so that the child can understand the shape and the pronunciation of the word of the learning card by means of the figure of the learning card.

However, the conventional learning card still has the drawback that requires an instructor to recite the word on the learning card to the children each time, such that the children can learn the pronunciation of the word on the learning card, but it takes much time of the instructor, and the children cannot learn new words anytime or anywhere, and it definitely will reduce the efficiency of learning.

### Summary of the Invention

It is a primary objective of the present invention to overcome the shortcomings of the prior art by providing a sensing type learning card and a learning system thereof, and thus it no longer needs to have an instructor to guide the learner at site.

To achieve the foregoing objective, the present invention provides a learning system comprising a sensing type learning card and a card reader. The sensing type learning card includes a card body and at least one identification label. The card body has at least one transparent area, and the identification label stores an identification data. The card reader comprises a platform, at least one sensing unit, at least one display unit, a storage unit and a processing unit. The platform defines a card disposing area for placing the sensing type learning card. The sensing unit is installed at the platform. The display unit is installed in the card disposing area. The storage unit stores at least one learning data. If the sensing type learning card is placed on the card disposing area, the display unit corresponds to the transparent area, and the sensing unit senses the identification label to read the identification data, and the processing unit inquires the learning data corresponding to the identification data from the storage unit.

If there is a plurality of identification labels, each storing a different identification data, then the card reader can read different identification data to identify an upward, downward, frontside or backside direction of the sensing type learning card on the card disposing area.

Another objective of the present invention is to provide a sensing type learning card comprising a card body and at least one identification label. The card body has at least one transparent area. The identification label is installed at the card body, and the identification label stores a data, wherein the identification label can be a radio frequency identification (RFID) tag or a code.

In summation of the description above, the sensing type learning card and the learning system in accordance with the present invention can read the identification data and display the learning data corresponding to the identification data when the sensing type learning card is placed on the card disposing area, and the card reader can read different identification data to identify an upward, downward, frontside or backside direction of the sensing type learning card placed on the card disposing area. Therefore, users can use the learning system for a self-study learning of new words or playing a puzzle game.

### BRIEF DESCRIPTION OF THE DRAWINGS

- Fig. 1: is a block diagram of a learning system in accordance with the present invention;
- Fig. 2: is a block diagram of a learning system in accordance with a first preferred embodiment of the present invention;
- Fig. 3: is a schematic view of a learning system in accordance with a first preferred embodiment of the present invention;
- Fig. 4: is a block diagram of a learning system in accordance with a second preferred embodiment of the present invention;
- Fig. 5: is a first schematic view of a learning system in accordance with a second preferred embodiment of the present invention;
- Fig. 6: is a second schematic view of a learning system in accordance with a second preferred embodiment of the present invention;
- Fig. 7: is a third schematic view of a learning system in accordance with a second preferred embodiment of the present invention; and
- Fig. 8: is a fourth schematic view of a learning system in accordance with a second preferred embodiment of the present invention.

### DETAILED DESCRIPTION OF THE PREFERRED EMBODIMENTS

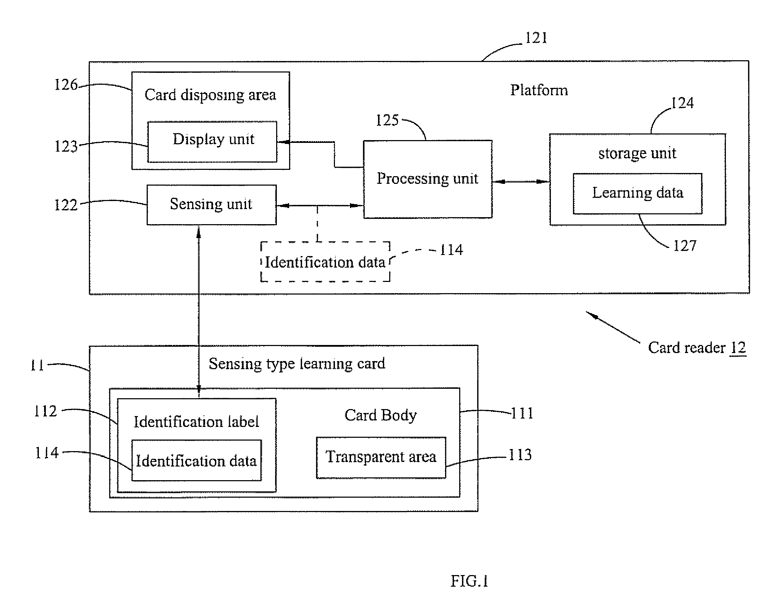

With reference to Fig. 1 for a block diagram of a learning system of the present invention, the learning system comprises a sensing type learning card 11 and a card reader 12.

The sensing type learning card 11 includes a card body 111 and an identification label 112, and the card body 111 has a transparent area 113, and the identification label 112 stores an identification data 114. The transparent area 113 is made of a glass material or a transparent plastic material.

The card reader 12 includes a platform 121, a sensing unit 122, a display unit 123, a storage unit 124 and a processing unit 125. The platform 121 defines a card disposing area 126 for placing a sensing type learning card 11. The sensing unit 122 is installed in the platform 121. The display unit 123 is installed in the card disposing area 126. The storage unit 124 stores a learning data 127. If a user places the sensing type learning card 11 on the card disposing area 126, such that the display unit 123 corresponds to the transparent area 113 and the sensing unit 122 senses the identification label 112 to read the identification data 114, and the processing unit 125 inquires a learning data 127 corresponding to the identification data 114 in the storage unit 124, and drives the display unit 123 to display the corresponding learning data 127, then the user can use the learning system for a self-study learning of new words or playing a puzzle game. The sensing unit 122 can be placed in the card disposing area 126 as needed.

The identification label 112 can be a RFID tag or a code, wherein the code can be an optical identification code, a barcode, a tag figure or a word identification code, and the sensing unit 122 can be a RFID reader or a code reader corresponding to the identification label 112, and the code reader can be an optical reader, a barcode reader or an image reader, and the display unit can display the learning data 127 by a word, a figure or an animation.

If the identification label 112 is a RFID tag, the identification label 112 is comprised of a RFID antenna and a RFID chip. When the sensing type learning card 11 is manufactured, the RFID antenna can be printed onto the card body 111 by a silk screen printing, or a transparent thin film metal such as silver wire is electroplated onto the card body 111.

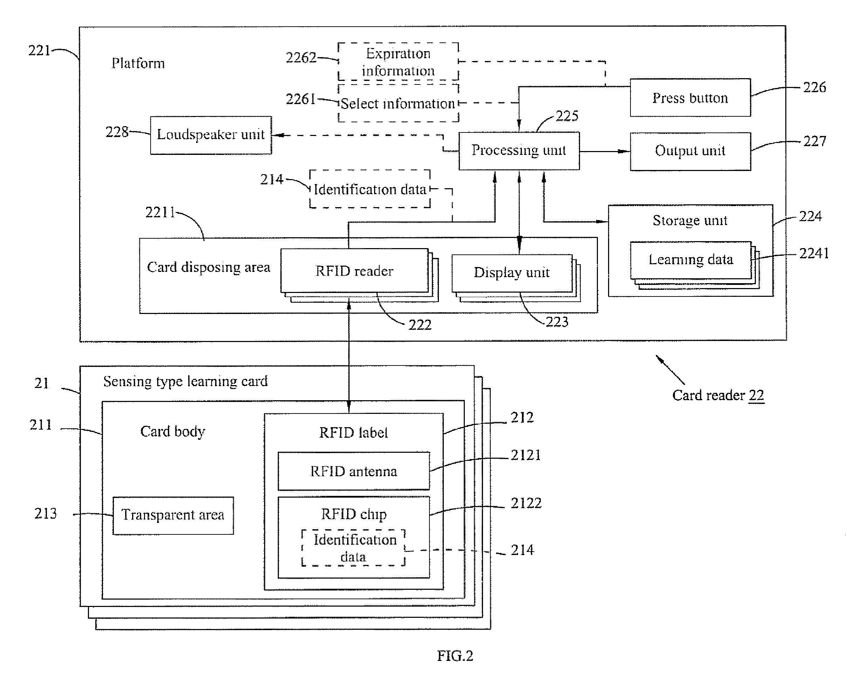

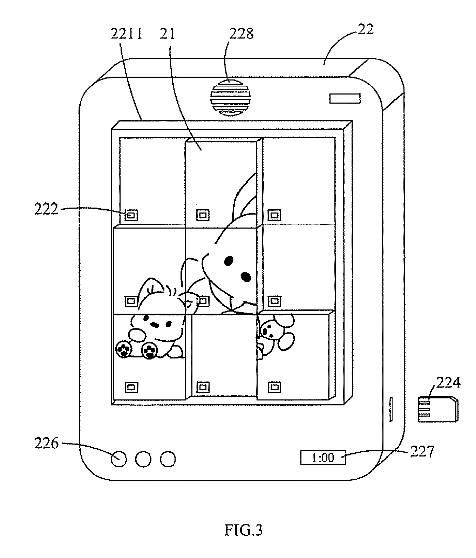

With reference to Figs. 2 and 3 for a block diagram and a schematic view of a learning system in accordance with a first preferred embodiment of the present invention respectively, the learning system comprises a plurality of sensing type learning cards 21 and a card reader 22. Each sensing type learning card 21 includes a card body 211 and a RFID label 212. The card body 211 has a transparent area 213. The RFID label 212 includes a RFID antenna 2121 and a RFID chip 2122, for storing an identification data 214.

The card reader 22 includes a platform 221, a plurality of RFID readers 222, a plurality of display units 223, a storage unit 224, a processing unit 225, a plurality of press buttons 226, an output unit 227 and a loudspeaker unit 228.

The platform 221 defines a card disposing area 2211 for placing the sensing type learning card 21. The RFID readers 222 are installed in form of an array in the platform 221. The display unit 223 is installed at the card disposing area 2211, and each display unit 223 corresponds to a RFID reader 222. The storage unit 224 stores a plurality of learning data 2241.

When the sensing type learning card 21 is placed in the corresponding card disposing area 2211, the RFID antenna 2121 produces an electromagnetic sensing by the radio waves generated by the RFID reader 222 to generate electric power, such that the RFID chip 2122 can issue the identification data 214 to the outside through the RFID antenna 2121. The RFID reader 222 receives and modulates/demodulates radio signals transmitted from the identification label 212 to read the identification data 214.

The processing unit 225 scans the plurality of RFID readers 222 to confirm the number of the RFID reader 222 that reads the identification data 214, and receives the identification data 214. However, the method of reading the identification data is not limited to the above method only, but a group of read circuits are used together with a plurality of antennas and a set of switch circuit, such that the processing unit 225 can control the switch circuit to scan an antenna array, to read the identification data 214. The processing unit 225 inquires a corresponding identification data 214 in the storage unit 224 and reads the learning data 2241 of the corresponding RFID reader 222 of the identification data 214, and drives the display unit 223 to display the inquired learning data 2241. In other words, a different RFID reader 222 will read the identification data 214 when the sensing type learning card is placed at an upward, downward, frontside or backside direction of the card disposing area 2211, so that when the processing unit 225 inquires a learning data 2241, the user can refer to a number of the RFID reader 222 that reads the identification data 214 to read the corresponding learning data 2241. If the sensing type learning card 21 has a RFID label 212, the card reader 22 can display the corresponding learning data 2241 according to the upward, downward, frontside, or backside direction of the identification label 212.

In addition, the learning system can be designed with a one-to-one relation between the identification data 214 and the RFID reader 222, such that when the sensing type learning card 21 is placed on a corresponding RFID reader 222, the processing unit 225 determines that the learning data 2241 is not matched according to the identification data 214 received by the RFID reader 222, and thus will not drive the display unit 223 to display the learning data 2241.

The learning data 2241 displayed by the display unit 223 can be a puzzle animation or a puzzle image. If a user places all sensing type learning cards 21 on the corresponding card disposing area 2211, the corresponding display unit 223 is driven by the processing unit 225 to display a whole puzzle image, so that the user can play a puzzle game.

A press button 226 is provided for users to operate and input a select information 2261 into the processing unit 225, such that the processing unit 225 reads the learning data 2241 corresponding to the select information 2261 to drive the display unit 223 to display different puzzle images including plants, animals, transportation means, buildings, landscapes, etc. and users can play different puzzle games to improve the fun of learning. The press button 226 is provided for users to input expiration information 2262 into the processing unit 225 to limit the time for users to complete the puzzle within a predetermined time. The processing unit 225 can drive the output unit 227 to display the remaining time or system information according to the expiration information 2262 to remind the users.

If a user has not finished the puzzle within the predetermined time, the processing unit 225 will read another learning data 2241 randomly or sequentially, such that the display unit 223 will display the corresponding puzzle image for the user to perform another puzzle game and give more fun to the game. If the user finishes the puzzle within the predetermined time, the processing unit 225 can drive the loudspeaker unit 228 to issue sounds like "Congratulations, you have completed the puzzle." (If the user cannot finish the puzzle within the predetermined time, the processing unit 225 can drive the loudspeaker unit 228 to issue the sounds like "Sorry, try again.")

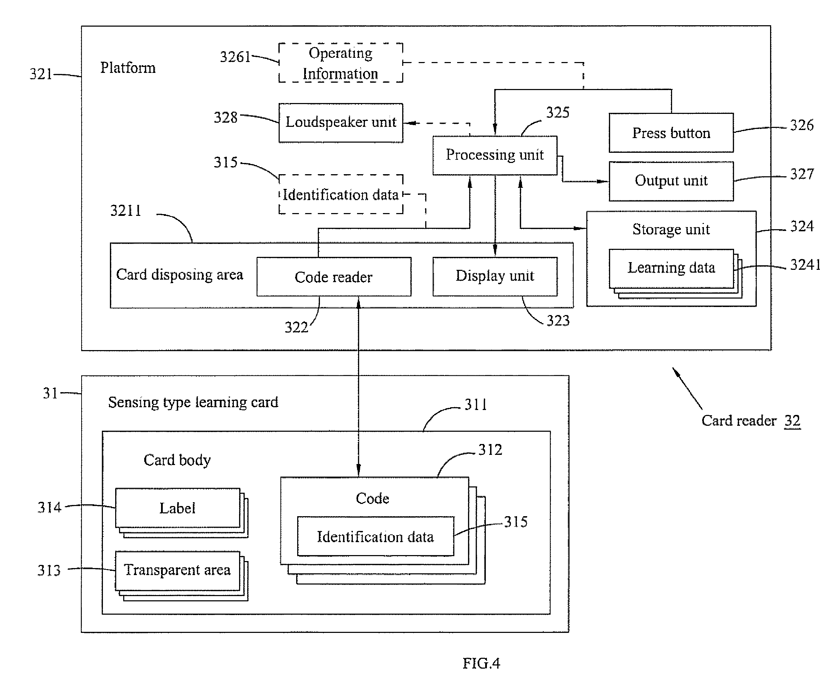

With reference to Fig. 4 for a block diagram of a learning system in accordance with a second preferred embodiment of the present invention, the learning system comprises at least one sensing type learning card 31 and a card reader 32.

The card reader 32 comprises a platform 321, a code reader 322, a display unit 323, a storage unit 324, a processing unit 325, a plurality of press buttons 326, an output unit 327 and a loudspeaker unit 328. The platform 321 defines a card disposing area 3211 for placing the sensing type learning card 31, and the code reader 322 and the display unit 323 are installed in the card disposing area 3211. The storage unit 324 stores a plurality of learning data 3241.

The sensing type learning card 31 comprises a card body 311 and a plurality of codes 312, and each code 312 represents a different identification data 315. The card body 311 installs a transparent area 313 and a plurality of labels 314, and each label 314 corresponds to a learning data 3241 and a code 312.

The code 312 can be an optical identification code, a barcode, a tag figure or a word identification code, and the code reader 322 can be an optical reader, a barcode reader or an image reader.

The plurality of codes 312 are preferably installed at different areas of the card body 311, such that when the sensing type learning card 31 is placed onto the card disposing area 3211, the card reader 32 can read the identification data 315 from the code reader 322 to identify the upward, downward, frontside or backside direction of the sensing type learning card 31 placed on the card disposing area 3211.

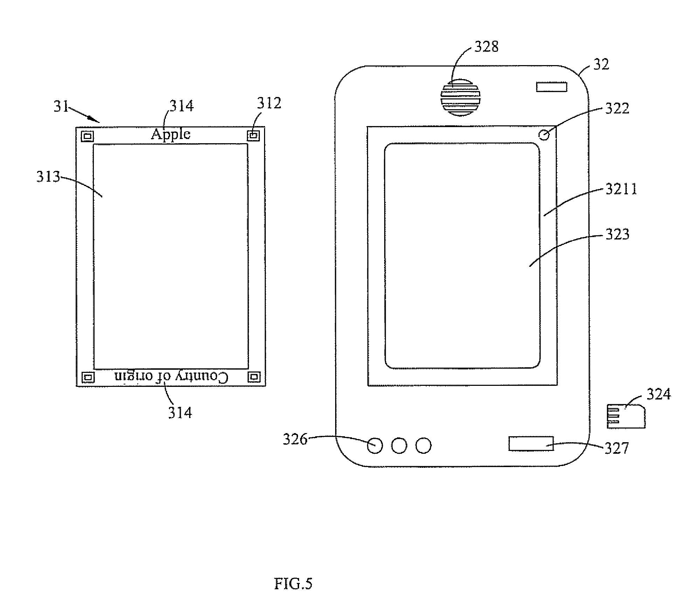

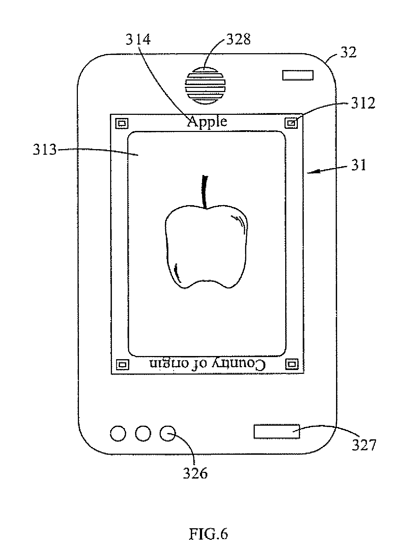

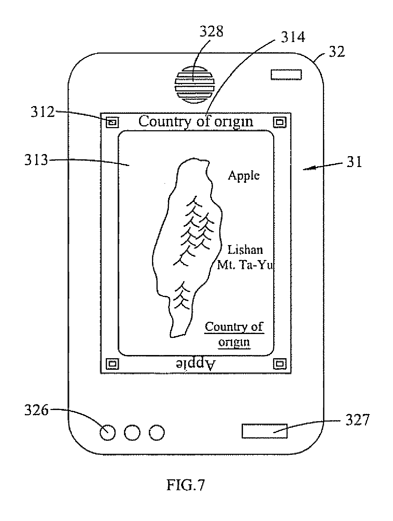

For simplicity, a label 314 with an "apple" printed on the top of the sensing type learning card 31 and a "country of origin" printed at the bottom of the sensing type learning card 31 is used for the illustration of the invention. In Figs. 4 to 6, when a user places the sensing type learning card 31 with the "apple" label 314 on the card disposing area 3211, the code 312 corresponding to the "apple" corresponds to the code reader 322, the code reader 322 reads the corresponding identification information of the "apple", and sends the information to the processing unit 325, and the processing unit 325 reads a learning data 3241 corresponding to the "apple", and drives the display unit 323 to display a picture of an "apple". With reference to Fig. 7, when a user turns the card upside down to show the label 314 with the "country of origin" on the top, the code 312 corresponding to the "country of origin" is turned accordingly and corresponding to the code reader 322, so that the code reader 322 can read the identification data 315 corresponding to the "country of origin" and transmit the identification data 315 to the processing unit 325, so that the processing unit 325 can read the learning data 3241 corresponding to the "country of origin", and drive the display unit 323 to display the picture of a "country of origin of the apple".

The backside of the sensing type learning card 31 includes a plurality of codes 312, and each code 312 includes an identification data indicating the "way of eating the apple" or the "condition for growing the apple". Therefore, users can learn related information of the "apple" through different ways of placing the card.

When a plurality of code readers 322 are installed equidistantly on the platform 321, the sensing type learning card 31 simply installs a code 312 for the card reader 32 to read the code 312 by different code readers 322 and identify the upward, downward, frontside or backside direction of the sensing type learning card 31 placed on the card disposing area 3211, so as to simplify the design of the sensing type learning card 31.

Users can operate the press button 326 to input operating information 3261 to the processing unit 325, so that the processing unit 325 reads the corresponding learning data 3241 and outputs the learning data 3241 to the output unit 327 and the loudspeaker unit 328, and the output unit 327 displays the introduction, spelling, pronunciation and teaching by a word or picture of the learning data 3241, and the loudspeaker unit 328 outputs the corresponding voice information to improve the learning effect.

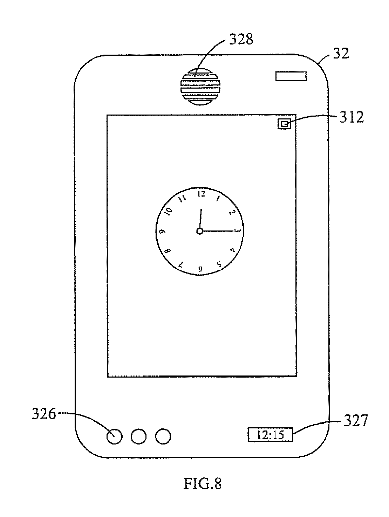

With reference to Figs. 4 and 8 for schematic views of a learning system in accordance with a second preferred embodiment of the present invention, users can use the learning system to learn to tell time, and uses the learning system to provide a testing mode to improve the learning effect. If the display unit 323 is used for displaying a time randomly, users can input the correct answer into the press button 326. If the user gives a correct answer, the loudspeaker unit 328 will issue a sound or a voice to inform the user about the correct answer. If the user gives a wrong answer, the loudspeaker unit 328 will issue a sound or a voice to inform the user to reenter a correct time or will issue a voice corresponding to the correct time.

## Claims

1. A learning system, comprising:
- a sensing type learning card (11), including a card body (111) and at least one identification label (112), and the card body (111) having at least one transparent area (113), and the identification label (112) storing an identification data (114);
- a card reader (12), including:
- a platform (121), having a card disposing area (126) defined thereon, for placing the sensing type learning card (11);
- at least one sensing unit (122), installed at the platform (121);
- at least one display unit (123), installed in the card disposing area (126);
- a storage unit (124), for storing at least one learning data (127); and
- a processing unit (125);
- wherein, if the sensing type learning card (11) is placed in the card disposing area (126), the display unit (123) corresponds to the transparent area (113), and the sensing unit (122) senses the identification label (112) to read the identification data (114), then the processing unit (125) inquires a learning data (127) corresponding to the identification data (114) in the storage unit (124) and drives the display unit (123) to display the inquired learning data (127).

2. The learning system of claim 1, wherein if there is a plurality of identification labels (112) and different identification data (114) are stored, the card reader (12) can read the different identification data (114) to identify the upward, downward, frontside or backside direction of the sensing type learning card (11) disposed in the card disposing area (126).

3. The learning system of claim 1, wherein if there is a plurality of sensing units (122), the card reader (12) can identify an upward, downward, frontside or backside direction of the sensing type learning card (11) disposed in the card disposing area (126).

4. The learning system of claim 3, wherein the sensing type learning card (11) only requires an identification data (114) to correspond to a plurality of learning data (127) stored in the storage unit (124).

5. The learning system of claim 1, wherein the card body (111) of the sensing type learning card (11) includes at least one label corresponding to a learning data (127) displayed by the display unit (123).

6. The learning system of claim 1, wherein the identification label (112) is a RFID tag (212) or a code (312).

7. The learning system of claim 6, wherein the code (312) is an optical identification code, a barcode, a tag figure or a word identification code.

8. The learning system of claim 1, wherein the sensing unit (122) is a RFID reader (222) or a code reader (322).

9. The learning system of claim 8, wherein the code reader (322) is an image reader, a barcode reader or an optical reader.

10. The learning system of claim 1, wherein the card reader (22) further comprises at least one press button (226) and an output unit (227), and the press button (226) is provided for users to select other learning data (2241) related to the inquired learning data (2241), and the output unit (227) outputs the selected learning data (2241).

11. A sensing type learning card, comprising:
- a card body (111), having at least one transparent area (113); and
- at least one identification label (112), installed at the card body (111), for storing an identification data (114).

12. The sensing type learning card of claim 11, wherein the card body (111) is made of a transparent material.

13. The sensing type learning card of claim 11, wherein the identification label (112) is a radio frequency identification (RFID) tag.

14. The sensing type learning card of claim 13, wherein the RFID tag includes a RFID antenna (2121) and a RFID chip (2122), whereby preferably the RFID antenna (2121) is printed onto the card body (211).

15. The sensing type learning card of claim 11, wherein the identification label (112) is a code (312), whereby preferably the code (312) is an optical identification code, a barcode, a tag figure or a word identification code.
